# FASCICULE DE BREVET EUROPEEN

(11) **EP 3 051 519 B1**
(45) Date de publication et mention de la délivrance du brevet: **30.03.2022**
(21) Numéro de dépôt: 16152090.3
(22) Date de dépôt: 20.01.2016
(51) Int. Cl.: G08G 5/00, G05G 5/04, G05D 1/00, G05D 1/10, G01C 21/20, B64C 27/04, B64D 31/06, B64D 45/00

(54) **SYSTÈME DE SÉCURITÉ, HÉLICOPTÈRE ÉQUIPE D'UN TEL SYSTÈME ET PROCÉDÉ DE SÉCURITÉ VISANT À ÉVITER UN ÉVÉNEMENT INDÉSIRABLE**
SICHERHEITSSYSTEM, HUBSCHRAUBER, DER MIT EINEM SOLCHEN SYSTEM AUSGESTATTET IST, UND SICHERHEITSVERFAHREN ZUM VERMEIDEN VON UNERWÜNSCHTEN EREIGNISSEN
A SAFETY SYSTEM, A HELICOPTER FITTED WITH SUCH A SYSTEM, AND A SAFETY METHOD SEEKING TO AVOID AN UNDESIRABLE EVENT

(30) Priorité: 29.01.2015 FR 1500167
(43) Date de publication de la demande: 03.08.2016
(73) Titulaire: Airbus Helicopters, 13725 Marignane Cedex (FR)
(72) Inventeur: NIKOLAJEVIC, Konstanca, 13010 MARSEILLE (FR); BELANGER, Nicolas, 13270 FOS SUR MER (FR); DAMIANI, Nicolas, 13009 MARSEILLE (FR); VIOLETTE, Arnaud, 13127 VITROLLES (FR)
(74) Mandataire: GPI & Associés

(56) Documents cités:
- EP-A1- 1 517 211
- EP-A1- 1 832 850
- EP-A2- 0 790 487
- EP-A2- 1 369 665
- EP-B1- 1 891 618
- US-A1- 2002 055 809
- US-A1- 2006 158 350
- US-B1- 6 940 426

## Description

La présente invention concerne le domaine de l'aéronautique et les aides au pilotage d'un aéronef à voilure tournante tel un hélicoptère. Elle vise plus particulièrement un système de sécurité visant à éviter un événement indésirable telle une collision avec l'environnement extérieur et est basé sur l'observation de la réduction du champ de trajectoires possibles pour un hélicoptère en fonction du temps. En effet, un hélicoptère équipé avec un tel système de sécurité est plus sûr car il permet de limiter les risques d'accident. En outre, un tel hélicoptère peut être piloté à distance, tel un drone, ou permet d'embarquer un pilote et/ou un équipage.

L'invention concerne également un procédé permettant de limiter les risques d'accidents lors du vol d'un hélicoptère, et malheureusement, lorsqu'une collision avec le relief ou un obstacle ne peut être évitée, un tel procédé peut permettre de limiter les conséquences de cet accident.

De façon générale, les systèmes et les procédés de sécurité connus pour ce type d'applications se contentent d'évaluer un risque en utilisant une base de données dans laquelle sont stockées des données en relation avec des accidents passés. Un tel système a notamment été décrit dans le document US 6 940 426.

Cependant, ce type de système de sécurité n'est pas efficient dans le cas où il se présenterait un événement indésirable non répertorié dans sa base de données. De plus, les événements indésirables sont souvent complexes car ils émanent d'un enchaînement de plusieurs événements indésirables contribuant à dégrader la situation courante de vol, voire dans le pire des cas, à un accident de l'hélicoptère. Or, il n'est pas possible d'identifier, et de recenser, tous les effets produits par les différentes combinaisons possibles d'événements indésirables conduisant à un accident.

Un premier objectif de l'invention est donc de fournir une solution simple, sûre et efficace permettant d'identifier un risque d'accident et de tenter de l'éviter.

De plus, tel que présenté dans le document US 2002 0055809, il est également connu d'utiliser le principe de la logique floue pour évaluer des risques fonction de la situation de vol courante. Cependant, dans ce cas, les trajectoires d'évitement du risque sont des trajectoires standards prédites, c'est à dire préenregistrées dans une mémoire. De plus, ces trajectoires s'effectuent en conservant la vitesse courante de l'hélicoptère ce qui peut, dans certains cas, augmenter le risque d'accident et en tout état de cause ne pas en limiter ses conséquences.

De même et tel que décrit dans le document EP 1 891 618, il est connu un procédé et un système d'aide au pilotage d'un avion de transport militaire permettant d'effectuer automatiquement une trajectoire d'évitement lors d'une détection d'une menace sol/air.

Cependant dans ce cas, les trajectoires d'évitement sont des trajectoires latérales à basse altitude présentant au moins un virage latéral et au moins une pente limite pour permettre de réaliser une trajectoire d'évitement s'écartant au maximum de la trajectoire initiale. De plus, l'ensemble des trajectoires de repli d'un tel avion est donc limité et ne nécessite pas un calculateur perfectionné.

Ainsi, le document EP 1 891 618 ne divulgue pas système compotant un calculateur spécifique permettant de générer une enveloppe en trois dimensions de trajectoires de repli, cette enveloppe étant définie comme étant l'ensemble des positions atteignables par un hélicoptère qui est bien plus complexe et importante que l'ensemble des positions atteignable par un avion. Un tel calculateur ne peut en aucun cas proposer des trajectoires de repli comportant par exemple des tronçons verticaux et/ou des trajectoires de freinage et à tout le moins des trajectoires sans virage latéral.

De même, les documents EP 1 369 665, EP 0 790 487, EP 1 517 211, US 2006/158350 et EP 1 832 850 décrivent différents procédés et systèmes d'aide au pilotage d'aéronefs volants à basse altitude pour éviter des collisions entre un aéronef et le terrain au dessus duquel il évolue. Ces procédés et systèmes permettent alors également de modifier automatiquement la trajectoire de vol d'un avion lorsqu'un obstacle, telle une montagne, est identifié sur la trajectoire courante de l'avion.

Cependant, aucun des documents EP 1 369 665, EP 0 790 487, EP 1 517 211, US 2006/158350 et EP 1 832 850 ne décrit un système de sécurité comportant à la fois un calculateur spécifique tel que décrit précédemment, un organe d'urgence pour alerter d'une diminution du nombre de trajectoires de repli de l'hélicoptère et un organe de commande pour effectuer des actions correctives de pilotage lorsque le nombre de trajectoires de repli diminue encore.

La présente invention a alors pour objet de proposer un système de sécurité permettant de s'affranchir des limitations mentionnées ci-dessus, ce système, et le procédé correspondant, permettant en effet d'améliorer la sécurité d'un hélicoptère confronté à un ou plusieurs événements indésirables combinés. Par ailleurs, dans le cas où l'accident ne peut être évité, ce système de sécurité permet de limiter les conséquences de l'accident.

L'invention concerne donc un système de sécurité visant à éviter un accident lors du pilotage d'un hélicoptère et à en minimiser les conséquences lorsque l'accident dudit hélicoptère est inévitable selon la revendication 1.

Autrement dit, un tel calculateur permet de réaliser en temps réel un diagnostic de sécurité de la situation de vol et de fournir un ensemble de trajectoires adaptées à la situation. Le diagnostic de sécurité repose en outre sur l'analyse des capacités de manœuvrabilité de l'hélicoptère dans l'environnement où il évolue, et ce, en prenant en compte le relief, les obstacles fixes et les obstacles mobiles.

Le calculateur de sécurité génère ainsi en permanence un ensemble de trajectoires réalisables par l'hélicoptère au sens de ses capacités dynamiques, c'est-à-dire en balayant, à partir de la position courante de l'hélicoptère, l'espace en trois dimensions.

Ainsi, les propriétés dynamiques de l'hélicoptère sont appliquées de la même façon à toutes les trajectoires de l'hélicoptère quelle que soit la direction dans l'espace. On obtient alors un réseau de trajectoires paramétrées en fonction de leurs sollicitations dynamiques. En effet, le calculateur peut générer à la fois des trajectoires sollicitant peu et des trajectoires sollicitant fortement l'hélicoptère au sens dynamique.

Un algorithme d'extrapolation de trajectoires génère alors l'ensemble des trajectoires des obstacles mobiles en fonction de leurs évolutions passées en analysant des données relatives à leurs positions, leurs orientations, leurs vitesses et leurs accélérations.

Le système extrait par suite l'ensemble des trajectoires réalisables, c'est-à-dire celles qui n'entrent en collision ni avec le relief, ni avec les obstacles fixes, ni avec les obstacles mobiles. On forme ainsi l'ensemble des trajectoires réalisables Tr par l'hélicoptère à l'instant t.

Par ailleurs grâce à l'emploi d'un organe d'urgence, un tel système de sécurité permet de mettre en œuvre des actions visant à favoriser l'arrivée rapide des secours sur le lieu de l'accident. De telles actions consistent en une transmission automatique des données de vol aux autorités de secours, et ce, avant le choc avec le relief ou un obstacle. De telles données de vols comprennent les coordonnées de latitude et longitude issues d'un module GPS, ou encore la vitesse et la direction de vol.

Par ailleurs, la première valeur de seuil permettant de déclencher le signal d'alerte est avantageusement comprise entre 10 et 100 trajectoires de repli. Cette première valeur de seuil est, selon l'invention, variable en fonction de la vitesse de décroissance du nombre de trajectoires de repli. Ainsi, lorsque la vitesse de décroissance est rapide, la première valeur de seuil peut avantageusement être élevée. Au contraire lorsque la vitesse de décroissance est lente, la première valeur de seuil peut être basse.

Enfin l'utilisation supplémentaire d'un organe de commande, fait qu'un tel système de sécurité permet de mettre en œuvre des actions visant à diminuer l'énergie de l'impact transmise à l'équipage et au pilote lors d'un crash. Pour ce faire, le calculateur de sécurité identifie le moment où le choc est inévitable. A partir de cet instant, l'organe de commande reçoit des instructions du calculateur et réalise alors des actions visant à diminuer les conséquences du choc. Par exemple, l'organe de commande du système de sécurité peut réaliser une décélération d'urgence, un cabrage ou toute autre manœuvre permettant de réduire les conséquences de l'impact avec le sol ou encore une plateforme.

Avantageusement, les trajectoires de repli peuvent appartenir à au moins deux groupes de trajectoires correspondant à deux niveaux distincts de sécurité préparamétrés par le pilote avant une mission.

En d'autres termes, on obtient un réseau formé par au moins deux trajectoires distinctes paramétrées en fonction de leurs sollicitations dynamiques.

En pratique, le calculateur peut identifier parmi l'enveloppe en trois dimensions des trajectoires de repli, au moins une trajectoire de repli préférée, et le système de sécurité peut comporter une interface homme-machine permettant au pilote de sélectionner la trajectoire de repli préférée.

Ainsi, le système de sécurité est apte à sélectionner une trajectoire, parmi le réseau de trajectoires, en fonction des objectifs fixés à l'avance, tels que notamment une limite de sollicitation dynamique de l'hélicoptère, une proximité du relief ou des obstacles, une limite de changements de direction sur une courte période de temps, et un éloignement par rapport à la route initiale.

Ces trajectoires peuvent être directement transmises via l'interface homme-machine au pilote et assorties d'une note dont le calcul est basé sur le respect des objectifs définis à l'avance. La trajectoire ayant la meilleure note est alors affichée en premier, par exemple sur un écran. Cette trajectoire préférée peut également être transmise au pilote automatique pour être automatiquement utilisée en cas d'urgence.

Selon un autre mode de réalisation, l'interface homme-machine peut également permettre d'orienter le choix ou d'effectuer des propositions pour le choix de la trajectoire selon des critères de préférence de la trajectoire.

Par ailleurs, le calculateur de sécurité possède ainsi une capacité à établir un diagnostic de sécurité en fonction de la proximité du danger. Le calcul objectif et formel réalisé par le calculateur permet d'estimer le rapprochement et l'imminence du danger selon une échelle de sécurité basée notamment sur : la diminution du cardinal de Tr ou encore de sa dérivée correspondant à la vitesse de diminution du nombre des trajectoires de repli, l'augmentation de la sollicitation dynamique minimale requise pour éviter l'accident, la distance à l'obstacle/relief observable sur les trajectoires réalisables.

Comme déjà évoqué, l'invention concerne également un hélicoptère remarquable en ce qu'il comporte un système de sécurité tel que présenté ci-dessus.

Un tel hélicoptère peut notamment se présenter sous la forme d'un hélicoptère avec un équipage à bord de celui-ci mais pas nécessairement. En effet, l'hélicoptère conforme à l'invention peut être commandé à distance c'est-à-dire que son pilote ou son équipage est déporté de celui-ci.

Enfin, l'invention concerne également un procédé de sécurité visant à éviter un accident lors du pilotage d'un hélicoptère et à en minimiser les conséquences lorsque l'accident dudit hélicoptère est inévitable selon la revendication 5.

Autrement dit, à chaque point de vol au cours d'une mission, le procédé génère un ensemble de trajectoires candidates de repli dans toutes les directions de l'espace avec des niveaux de sollicitations différents. Le niveau de sollicitations correspond à la contrainte imposée par la manœuvre sur les capacités de vol de l'hélicoptère.

Par exemple, dans le cas d'une trajectoire de montée pour éviter un obstacle, le pilote peut choisir de monter progressivement "sans forcer" sur les commandes de vol, car il est assez loin de l'obstacle. Alternativement, le pilote peut choisir de solliciter les capacités de vol au maximum afin de monter plus rapidement car il estime que l'obstacle est trop proche pour être évité de la façon précédente. Ainsi, le procédé de sécurité est capable de faire la différence entre ces deux situations.

L'ensemble des trajectoires de repli calculées représente la projection des positions atteignables par l'hélicoptère dans une région de l'espace défini. Par exemple, cette région peut correspondre à une durée de vol de 30 secondes. Ainsi, l'ensemble des trajectoires de repli générées pour 30 secondes de vol représente l'environnement discrétisé de positions atteignables par l'hélicoptère dans les prochaines 30 secondes de vol. Le diagnostic du risque est basé dans un premier temps sur la faisabilité des trajectoires calculées, c'est à dire celles qui ne conduisent pas à une collision avec le relief et les obstacles fixes ou mobiles.

Par ailleurs, chaque trajectoire correspond à au moins une courbe décrite par l'hélicoptère et calculée par rapport à un référentiel propre à celui-ci. Chaque trajectoire est constituée d'une succession de positions de l'espace, atteignables par l'hélicoptère. Cet ensemble de trajectoires est ensuite analysé, filtré et enfin pondéré dans le but d'être trié et mis à disposition de l'équipage en tant que manœuvre d'évitement d'urgence. Le but d'une telle manœuvre est de mettre l'hélicoptère et son équipage en sécurité. Par analogie, une manœuvre d'évitement diminue le risque courant de la mission.

De plus, la détection d'une diminution brutale du cardinal de l'ensemble des trajectoires ou d'un sous-ensemble des trajectoires permet d'identifier un événement indésirable et de remonter des alertes au pilote de l'hélicoptère.

Par ailleurs comme déjà indiqué précédemment, en émettant un signal d'alerte, on peut prévenir les secours qu'un accident va survenir quelques instants avant l'impact. Les secours sont ainsi sûrs de recevoir des informations relatives à la position de l'hélicoptère qui n'est pas encore endommagé par un crash. En effet, avec un tel procédé on s'assure de l'intégrité du système de localisation installé à l'intérieur de l'hélicoptère pour envoyer le signal d'alerte. Or, lors d'un accident il est tout à fait envisageable que le module GPS de l'hélicoptère soit endommagé et inopérant rendant alors plus complexes et longues les recherches permettant de secourir l'équipage ou simplement de récupérer les restes de l'hélicoptère lorsqu'il s'agit d'un drone.

Enfin lorsque le nombre de trajectoires de repli devient nul, on peut par exemple commander un ralentissement brutal, ou encore une trajectoire en ascension ou descente par un mouvement de cabrage ou de piqué de l'hélicoptère.

Un tel procédé est donc aussi remarquable en ce qu'il comporte une étape permettant de commander la trajectoire de l'hélicoptère lorsqu'il n'y a plus d'autre alternative.

En pratique, on peut générer les trajectoires de repli pour qu'elles appartiennent à au moins deux groupes de trajectoires correspondant à deux niveaux distincts de sécurité préparamétrés par le pilote avant une mission.

Par exemple, le premier groupe de trajectoires de repli peut correspondre à des trajectoires sûres car sollicitant faiblement les organes sustentateurs ou structurels de l'hélicoptère. Le deuxième groupe peut quant à lui correspondre à des trajectoires risquées car sollicitant plus fortement les organes sustentateurs ou structurels de l'hélicoptère.

Bien entendu, des groupes intermédiaires de trajectoires de repli peuvent également être paramétrés entre le premier et le second groupe pour former l'ensemble de l'enveloppe en trois dimensions des trajectoires de repli.

Selon un mode de réalisation particulier, le procédé peut comporter des étapes consistant à :
- identifier, parmi l'enveloppe en trois dimensions des trajectoires de repli, au moins une trajectoire de repli préférée, et,
- proposer au pilote, via une interface homme-machine, la sélection de la trajectoire de repli préférée lorsqu'un événement indésirable est détecté.

Ainsi, les trajectoires sont assorties d'une note dont le calcul est basé sur le respect d'objectifs prédéterminés avant la mission. La trajectoire de repli ayant la meilleure note est considérée comme étant la trajectoire de repli préférée et est affichée en premier sur l'interface homme-machine. L'intérêt du calculateur de sécurité réside dans sa capacité à établir un diagnostic en fonction de la proximité du danger.

Bien entendu, l'interface homme-machine peut se présenter sous diverses formes telles qu'un écran intégré à une visière de casque, un dispositif électronique comportant un écran tactile ou encore une projection holographique en trois dimensions adaptée pour permettre l'affichage et la sélection manuelle d'une trajectoire en trois dimensions.

Avantageusement, en cas d'absence de sélection de la trajectoire de repli préférée par le pilote de l'hélicoptère, le procédé peut comporter une étape consistant à mettre en œuvre automatiquement la trajectoire de repli préférée.

De cette manière, dans certains cas d'urgence, cette trajectoire de repli préférée peut également être transmise directement au pilote automatique pour éviter un obstacle imminent. La trajectoire préférée est dans ce cas automatiquement suivie sans nécessiter sa sélection par le pilote de l'hélicoptère.

En pratique, préalablement à une mission de l'hélicoptère, le procédé de sécurité peut comporter une étape consistant à fournir à un calculateur des paramètres propres aux conditions de vol de l'hélicoptère, les paramètres étant choisis parmi le groupe comportant notamment la masse de la charge transportée par l'hélicoptère, le positionnement de son centre gravité et son autonomie de vol.

En d'autres termes, le pilote peut paramétrer le calculateur pour qu'il génère l'enveloppe des trajectoires de repli en fonction de paramètres tels que, par exemple, la limite des sollicitations dynamiques de l'hélicoptère, la distance minimale entre l'hélicoptère et le relief, la limite d'accélération lors d'un changement de direction sur une courte période de temps et l'éloignement par rapport à la trajectoire initiale.

Selon un mode de réalisation avantageux, préalablement à une mission de l'hélicoptère, le procédé de sécurité peut comporter une étape consistant à transmettre à un calculateur des préférences de pilotage dans le cas où l'événement indésirable est identifié, les préférences étant choisies parmi le groupe comportant notamment la limite des sollicitations dynamiques de l'hélicoptère, la proximité du relief et/ou des obstacles fixes ou mobiles, la limite de changements de direction sur une courte période de temps et l'éloignement par rapport à une route initiale.

En effet, le calculateur est paramétré par l'équipage au préalable de façon à permettre l'affichage des trajectoires de repli sur l'interface homme-machine selon des préférences d'affichage prédéterminées. Par exemple, le pilote peut choisir de privilégier l'affichage de trajectoires à faibles sollicitations de l'hélicoptère ou bien des trajectoires respectant une distance minimale vis-à-vis du sol. Bien entendu, de telles préférences d'affichage émanant du pilote ou de l'équipage peuvent également être modifiées au cours de la mission.

L'obtention d'une image des trajectoires de repli par l'hélicoptère à court terme, et ce, en temps réel, est un avantage considérable. Non seulement, l'équipage peut visualiser différentes trajectoires de repli alternatives à la trajectoire de vol courante, mais en plus une telle fonction avionique assure, à chaque étape du vol, une quantification du risque courant en fonction des capacités propres de l'hélicoptère sans sortir du domaine de vol et en respectant les préférences de vol de l'équipage en termes de sécurité, de confort de vol et de caractéristiques des missions.

Par ailleurs, pour traiter un événement indésirable et choisir une trajectoire de repli appropriée, il est nécessaire de connaître constamment l'environnement extérieur autour de l'hélicoptère tel que le relief, les zones dangereuses et les obstacles fixes ou mobiles comme par exemple d'autres hélicoptères. Pour ce faire, plusieurs techniques peuvent être utilisées indépendamment ou en combinaison.

Ainsi, selon un premier mode de réalisation, le procédé peut comporter une étape visant à transmettre à un calculateur des données issues d'un capteur permettant de reconstituer une image en trois dimensions de l'environnement extérieur.

Dans ce cas, le capteur permet de sonder le relief afin de déterminer la présence d'un obstacle fixe ou mobile. Un tel capteur peut se présenter sous diverses formes, et notamment sous la forme d'un radar embarqué sur l'hélicoptère.

Selon un second mode de réalisation, le procédé peut comporter une étape visant à transmettre à un calculateur des données issues d'une base de données stockée dans une mémoire, les données consistant en une cartographie en trois dimensions de l'environnement extérieur.

Dans cet autre cas de figure, les informations relatives à l'environnement extérieur sont donc préenregistrées dans la mémoire et peuvent être consultées à tout instant par le calculateur.

Bien entendu, il est également envisageable selon un troisième mode de réalisation de combiner les deux modes de réalisation décrits ci-dessus. De cette façon, des obstacles fixes nouveaux, c'est-à-dire non cartographiés, ou encore des obstacles mobiles tels des aéronefs peuvent être évités au moyen d'un capteur. Le calculateur reçoit dans ce cas à la fois des informations issues de la mémoire et des informations sur l'environnement immédiat de l'hélicoptère générées par le capteur.

L'invention et ses avantages apparaîtront avec plus de détails dans le cadre de la description qui suit avec des exemples donnés à titre illustratif en référence aux figures annexées dans lesquelles :
- la figure 1 est une représentation schématique d'une enveloppe de trajectoires de repli d'un hélicoptère, conformément à l'invention,
- la figure 2 est une représentation schématique d'un système de sécurité conforme à l'invention.

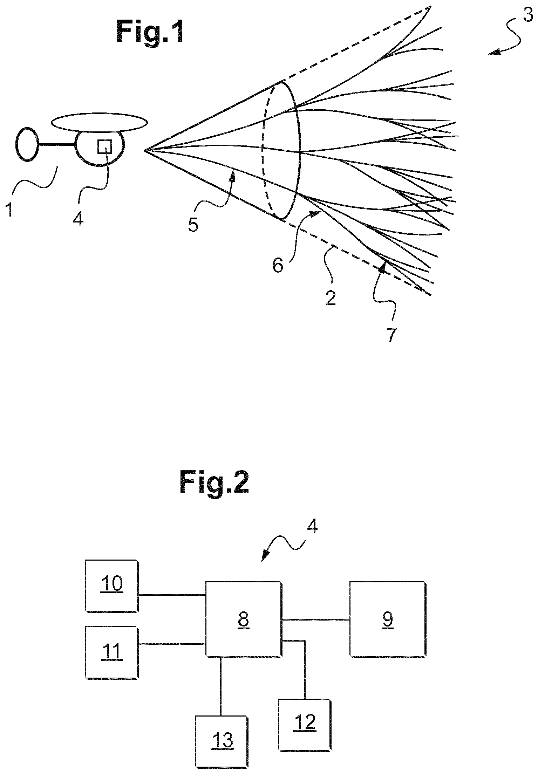

Comme déjà évoqué, l'invention concerne un système de sécurité permettant d'éviter un événement indésirable. Il comporte en outre un calculateur permettant de générer une enveloppe en trois dimensions des trajectoires de repli correspondant à l'ensemble des trajectoires que peut décrire l'hélicoptère. Une telle enveloppe est représentée schématiquement en deux dimensions à la figure 1.

Ce système, et le procédé d'évitement correspondant, permettent ainsi de matérialiser un environnement atteignable par l'hélicoptère pendant une durée de vol prédéterminée. L'ensemble des solutions atteignables débute ainsi sur la gauche de la figure 1 au niveau d'une position courante de l'hélicoptère. L'enveloppe 2 des trajectoires de repli 3 est générée en fonction des données reçues en temps réel par les organes de décision et/ou de commande. Ainsi, on forme une projection physique des positions futures atteignables par l'hélicoptère 1. Cela permet d'anticiper et de déterminer instantanément si les trajectoires calculées sont possibles. On est ainsi, en permanence certain, de pouvoir sélectionner une manœuvre alternative de sécurité.

De plus, un tel système ou procédé, permet de fournir plusieurs types de trajectoires de repli 3 possibles, telles que notamment les trajectoires d'évitement dans un plan. De telles trajectoires peuvent alors s'inscrire dans un plan horizontal, comme par exemple une commande d'un mouvement en roulis (dite plus simplement commande en roulis), ou dans un plan vertical comme par exemple une commande pour une trajectoire de montée.

Des trajectoires d'évitement peuvent également suivre une courbe en trois dimensions. Alors, cette courbe n'est pas contenue dans un plan. Typiquement, de telles trajectoires combinent à la fois une commande en montée et une commande en roulis.

Une représentation de la position atteignable par l'hélicoptère 1 à travers différents types de trajectoires présente l'avantage de permettre la construction d'une représentation multidirectionnelle des trajectoires possibles. Il est donc possible d'envisager des changements de direction durant une même trajectoire de repli.

Par exemple, à court terme, tel que pendant une durée de 20 à 30 secondes, un hélicoptère 1 peut successivement virer en roulis selon un segment 5 dans le plan horizontal, puis, dans un deuxième segment 6, monter verticalement et enfin dans un troisième segment 7 combiner une montée et un virage dans le sens opposé à celui du premier segment 5. Ainsi, afin d'être représentatif sur les différents cas possibles, une trajectoire de repli 3 telle que décrite ci-dessus est décomposable en plusieurs segments indépendants 5, 6 et 7 reliés par des transitions.

Selon une première variante de l'invention, les segments 5, 6 et 7 de chaque trajectoire 3 peuvent être calculés grâce à des primitives représentatives des capacités dynamiques de l'hélicoptère. Ces primitives sont les courbes mathématiques telles que des arcs de cercle, des arcs de clothoïde, des lignes droites, des arcs d'hélice, des transitions hélicoïdales, ou encore des spirales d'Euler généralisées, par exemple. Les trajectoires de repli sont alors calculées en respectant des caractéristiques en courbure, en torsion, en angle de montée et en fonction de leurs dérivées respectives afin de ne pas sortir de l'enveloppe de vol.

Selon une seconde variante de l'invention, les trajectoires peuvent également être construites en introduisant différentes lois de commandes et en calculant les positions consécutives grâce à un modèle dynamique.

Comme indiqué ci-dessus, deux segments consécutifs n'ont pas nécessairement la même courbure, la même direction ou la même valeur de torsion.

On considère aussi des trajectoires dans lesquelles il se produit une décélération/accélération rapide sur au moins un tronçon de la trajectoire de repli. La combinaison des segments permet alors de réaliser une discrétisation pertinente de l'espace. Ainsi, il est plus probable de trouver une trajectoire se faufilant au travers d'un relief chaotique.

L'hélicoptère peut ainsi par exemple être apte à voler dans une région montagneuse ou vallonnée au cours d'une mission de transport public de passagers ou lors d'un vol tactique.

Tel que représenté à la figure 2, le système de sécurité 4 comporte un calculateur 8 permettant de générer l'enveloppe 2 des trajectoires de repli 3. Un tel calculateur permet notamment de mettre en œuvre un procédé de sécurité visant à éviter un événement indésirable lors du pilotage de l'hélicoptère 1 En effet, ce procédé comporte notamment une étape consistant à dénombrer les trajectoires de repli de l'hélicoptère .

Pour ce faire, à chaque instant du vol, le calculateur 8 permet à l'équipage de connaître une valeur représentative du risque courant du vol. Le calculateur 8 génère alors une note de sécurité propre à chacune des trajectoires de repli 3 possibles, c'est à dire pour les trajectoires permettant à l'hélicoptère de ne pas entrer en collision avec le sol et de passer à une distance suffisamment sûre du relief et des obstacles. Les seuils pris en compte par le calculateur 8 sont des paramètres qui peuvent être ajustés selon la mission pratiquée et selon les préférences de l'équipage.

Le fait que la note du risque soit quantifiée et qu'elle soit actualisée en temps réel ne signifie pas nécessairement qu'elle est explicitement affichée à l'équipage. Les notes ainsi déterminées par le calculateur 8 peuvent cependant, dans certains cas, être transmises à l'équipage par l'intermédiaire d'une interface homme-machine 9.

Le diagnostic du risque repose principalement sur l'analyse de l'environnement atteignable par l'hélicoptère 1, pour un temps de vol donné, et est matérialisé par un affichage des trajectoires de repli 3, autour de la position courante de l'hélicoptère.

Le calculateur 8 génère alors l'ensemble des positions atteignables à court terme par l'hélicoptère 1 sous forme de trajectoires, par exemple pour une période de 20 à 30 secondes, et ce, dans toutes les directions de l'espace.

Ainsi, lorsque l'hélicoptère 1 se rapproche du relief, le nombre de positions atteignables diminue et des trajectoires de repli 3 ne sont plus possibles. En effet, les trajectoires de repli 3 sont des projections des positions éventuellement atteignables par l'hélicoptère 1 dans le futur. Ainsi, elles témoignent aussi de son rapprochement du sol ou des obstacles fixes ou mobiles

En outre, un tel rapprochement peut être matérialisé progressivement par des paliers de hauteur par rapport au relief. Par exemple, en prenant comme référence la hauteur courante du vol, on peut considérer que l'hélicoptère 1 est en sécurité lorsqu'il se trouve à une distance minimale de 300m du sol, du relief ou des obstacles fixes ou mobiles.

Cela signifie, en termes de sécurité/risque, qu'aucune trajectoire de l'espace atteignable dans les prochaines 30 secondes de vol ne se situe à une distance inférieure à 300m du relief. Ce raisonnement peut être reproduit par paliers de 50m par exemple afin d'en déduire plus efficacement la dégradation de la situation courante du vol.

Ainsi, au fur et à mesure que l'hélicoptère se dirige vers le relief, les trajectoires discrétisant l'espace atteignable autour du point de vol courant conduisent l'hélicoptère à rencontrer le relief et sont donc, soit purement et simplement éliminées par le calculateur 8, soit se voient notées par le calculateur 8 avec une note de risque plus importante en fonction du palier de hauteur dans lequel elles se trouvent.

Par ailleurs, le risque global augmente également car les trajectoires considérées comme sûres disparaissent progressivement ce qui dégrade la sécurité du vol. Les trajectoires de repli 3 encore sûres sont stockées dans une base de données centrale et les plus pertinentes sont proposées à l'équipage comme trajectoires alternatives à la trajectoire courante. Les trajectoires moins sûres, car se trouvant à une distance inférieure à 300m du relief sont aussi stockées mais affectées d'un rang inférieur ce qui les positionne plus bas dans la liste de choix du calculateur 8.

Ce raisonnement rend prévisible la disparition progressive des trajectoires de repli 3 du fait de la disparition progressive du nombre de trajectoires de repli tout d'abord par dégradation de leur sécurité individuelle et puis par augmentation du risque global. On constate ainsi que plusieurs barrières de sécurité objectives tombent successivement au cours du vol. A ce paramètre de hauteur par rapport au relief, on peut également ajouter d'autres paramètres tels que par exemple le degré de sollicitations de l'hélicoptère 1.

A titre d'exemple, le déroulement d'un vol peut débuter à l'instant t₀ correspondant à une position sûre de l'hélicoptère 1, c'est-à-dire se trouvant à une distance acceptable du relief. Le niveau de risque est alors à une valeur acceptable, et toutes les trajectoires de repli 3 sont à une distance supérieure à 300m du sol. Il y a alors un nombre important de trajectoires de repli 3 possibles.

A un instant t = t₀+δT, l'hélicoptère 1 se rapproche du relief de face, le relief culminant à une altitude supérieure à l'altitude courante de l'hélicoptère 1. Le risque augmente car le nombre de trajectoires de repli permettant d'éviter le relief diminue.

Par ailleurs, la détection du rapprochement du relief peut être réalisée de diverses manières.

Comme déjà évoqué, selon un premier mode de réalisation, le système de sécurité 4 peut comporter un capteur 10 tel un radar permettant d'effectuer un relevé topographique de l'environnement extérieur. Les données issues de ce capteur 10 sont ensuite transmises au calculateur 8.

Selon un second mode de réalisation, le système de sécurité 4 peut comporter une mémoire 11 permettant de stocker une cartographie en trois dimensions de la zone survolée. Des données stockées dans cette mémoire 11 sont alors constamment transmises au calculateur 8 pour qu'il génère les trajectoires de repli en fonction du relief.

Enfin, selon un troisième mode de réalisation et tel que représenté à la figure 2, le système de sécurité 4 peut comporter à la fois un capteur 10 tel que précédemment décrit et une mémoire 11 apte à stocker une cartographie de la zone survolée.

Le système de sécurité 4 affiche alors à l'équipage, via l'interface homme-machine 9, une sélection de trajectoires de repli 3. Le calculateur 8 permettant cet affichage a été paramétré par l'équipage au préalable. Par exemple, l'équipage peut privilégier l'affichage de trajectoires à faibles sollicitations de l'hélicoptère 1 ou bien des trajectoires respectant une distance minimale vis-à-vis du terrain. Ces préférences de l'équipage sont modifiables au cours de la mission.

Par ailleurs, comme l'hélicoptère 1 se rapproche du relief de face le nombre de trajectoires de repli 3 diminue uniformément jusqu'au moment où il n'y a plus de trajectoires de repli 3 à faibles sollicitations. Autrement dit, pour éviter le relief à court terme, il ne reste plus que des trajectoires de repli à fortes sollicitations compatibles avec les caractéristiques dynamiques de vol de l'hélicoptère telles que notamment la solution consistant à s'arrêter qui est une trajectoire à forte décélération. Si l'hélicoptère 1 continue d'avancer comme il le fait depuis l'instant t₀, il n'y aura finalement plus de trajectoire de repli 3 possible pour l'hélicoptère 1.

Dans l'éventualité où le pilote ne prend pas de décisions pour éviter le relief, il est envisagé que le système de sécurité se substitue au pilote afin de sécuriser le vol. Cette substitution des commandes de vol peut notamment consister en la mise en vol stationnaire de l'hélicoptère 1, c'est-à-dire à un arrêt face au relief. Une autre solution peut être d'emprunter la trajectoire de repli 3 préférée déterminée par le calculateur 8. Dans tous les cas, l'équipage peut se substituer au système de sécurité 4 juste après l'action correctrice de ce dernier.

Avoir une image des trajectoires de repli 3 réalisables par l'hélicoptère 1 à court terme, et ce, en temps réel, est un avantage considérable. Non seulement, l'équipage dispose d'un affichage des trajectoires de repli 3 alternatives à la trajectoire courante du vol, mais un tel système de sécurité assure également, à chaque étape du vol, une quantification du risque courant.

Comme déjà vu précédemment, un tel risque est fonction des capacités propres de l'hélicoptère et est déterminé en respectant les préférences de vol de l'équipage en termes de sécurité, de confort de vol et des caractéristiques de la mission.

De plus, en ayant une représentation physique des positions atteignables par l'hélicoptère 1, on donne une réelle importance au risque courant calculé. En effet, au-delà d'une sécurité immédiate liée aux trajectoires possibles, ce risque permet de témoigner de la capacité de récupération de l'hélicoptère 1 face au danger. Par exemple, si l'hélicoptère 1 peut atteindre un certain nombre de positions à un instant t et si ce nombre se dégrade, on peut donner une estimation des chances à revenir à un seuil de risque acceptable. Un tel hélicoptère possède ainsi des propriétés de résilience aptes à garantir un niveau de sécurité stable pour celui-ci.

Enfin, en considérant que le choc avec le relief est inévitable ou encore que le nombre de trajectoires de repli 3 est inférieur à une première valeur de seuil prédéterminée et que l'hélicoptère 1 n'a pas pu se substituer au contrôle de l'équipage, par exemple parce que le pilote ne lui en donne pas l'autorisation, il est envisageable que le système de sécurité 4 comporte un organe d'urgence 12 apte à envoyer un signal d'alerte. De cette façon, les secours les plus proches peuvent être informés avant que se produise l'accident de l'hélicoptère 1. Les secours peuvent ainsi déployer les moyens appropriés pour le secourir au plus vite.

Un tel organe d'urgence 12 permet également d'orienter les secours vers le lieu d'un accident déterminé en fonction du risque courant et/ou de l'enveloppe 2 des dernières trajectoires de repli 3 de l'hélicoptère 1.

De même, le système de sécurité 4 comporte également un organe de commande 13 permettant de mettre en oeuvre automatiquement des actions correctives de pilotage de l'hélicoptère 1 pour limiter la force de l'impact de celui-ci avec le sol. Un tel organe de commande 13 est alors actionné lorsque le nombre de trajectoires de repli 3 de l'hélicoptère 1 diminue et devient nul.

Bien entendu, les paramètres choisis dans cet exemple tels que la hauteur minimale de 300m, ou les paliers de 50m ne sont qu'illustratifs et peuvent varier soit par préférence de l'équipage, soit pour des raisons de sécurité définies par le constructeur ou par la réglementation.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles, la portée de l'invention étant définie par les revendications.

## Revendications

1. Système de sécurité (4) visant à éviter un accident lors du pilotage d'un hélicoptère et à en minimiser les conséquences lorsque l'accident dudit hélicoptère (1) est inévitable, ledit système de sécurité (4) comportant :
• un calculateur (8) qui permet, à tout instant t, de générer une enveloppe en trois dimensions (2) de trajectoires de repli (3) de l'hélicoptère (1), ladite enveloppe (2) étant obtenue en calculant, à l'instant t, un ensemble de positions atteignables par l'hélicoptère (1) pendant une durée de vol prédéterminée, ledit calculateur (8) étant préalablement paramétré avec des données relatives aux capacités de vol de l'hélicoptère (1) incluant au moins une des capacités suivantes : vitesses et accélérations maximales dans les trois directions de l'espace, dérivées d'ordre supérieur de l'une au moins des vitesses ou accélérations maximales dans les trois directions de l'espace, rayons minimaux de rotation du mouvement en lacet, angles de montée ou de descente, masse maximale de la charge transportée et sollicitations maximales,
• un organe d'urgence (12) permettant d'émettre un signal d'alerte lorsque le nombre de trajectoires de repli (3) est inférieur à une première valeur de seuil, ladite première valeur de seuil étant variable en fonction d'une vitesse de décroissance dudit nombre de trajectoires de repli (3), l'organe d'urgence permettant la transmission automatique de données de vol à des autorités de secours, lesdites données de vols étant choisies parmi le groupe comportant les coordonnées de latitude et longitude issues d'un module GPS, la vitesse et la direction de vol, et
• un organe de commande (13) qui permet, lorsque le nombre de trajectoires de repli (3) est nul, de mettre en œuvre des actions correctives de pilotage de l'hélicoptère (1) pour minimiser les conséquences de l'accident de l'hélicoptère (1).

2. Système de sécurité selon la revendication 1,
**caractérisé en ce que** lesdites trajectoires de repli (3) appartiennent à au moins deux groupes de trajectoires correspondant à deux niveaux distincts de sécurité préparamétrés par le pilote avant une mission.

3. Système de sécurité selon l'une des revendications 1 ou 2,
**caractérisé en ce que** ledit calculateur (8) identifie parmi ladite enveloppe en trois dimensions (2) des trajectoires de repli (3), au moins une trajectoire de repli préférée, et **en ce que** ledit système de sécurité comporte une interface homme-machine (9) permettant au pilote de sélectionner ladite trajectoire de repli préférée.

4. Hélicoptère **caractérisé en ce que** ledit hélicoptère comporte un système de sécurité (4) selon l'une des revendications précédentes.

5. Procédé de sécurité visant à éviter un accident lors du pilotage d'un hélicoptère et à en minimiser les conséquences lorsque l'accident dudit hélicoptère (1) est inévitable,
ledit procédé étant mis en oeuvre par un système de sécurité comprenant un calculateur (8), un organe d'urgence (12) et un organe de commande (13), le procédé comportant au moins les étapes consistant à :
- préalablement à une mission de l'hélicoptère, paramétrer ledit calculateur (8) avec des données relatives aux capacités de vol de l'hélicoptère (1) incluant au moins une des capacités suivantes : vitesses et/ou accélérations maximales dans les trois directions de l'espace, dérivées d'ordre supérieur de l'une au moins des vitesses ou accélérations maximales dans les trois directions de l'espace, rayons minimaux de rotation du mouvement en lacet, angles de montée ou de descente, masse maximale de la charge transportée et sollicitations maximales,
- calculer et générer, par le calculateur (8), à tout instant t, une enveloppe en trois dimensions (2) de trajectoires de repli (3) de l'hélicoptère (1), ladite enveloppe (2) étant obtenue en calculant, à l'instant t, un ensemble de positions atteignables par l'hélicoptère (1) pendant une durée de vol prédéterminée,
- émettre, par l'organe d'urgence (12), un signal d'alerte lorsque le nombre de trajectoires de repli (3) est inférieur à une première valeur de seuil, ladite première valeur de seuil étant variable en fonction d'une vitesse de décroissance dudit nombre de trajectoires de repli (3), et transmettre automatiquement, par l'organe d'urgence (12), des données de vol à des autorités de secours, lesdites données de vols étant choisies parmi le groupe comportant les coordonnées de latitude et longitude issues d'un module GPS, la vitesse et la direction de vol, et
lorsque le nombre de trajectoires de repli (3) est nul, ledit procédé comporte des étapes consistant à :
- inhiber des commandes de pilotage issues d'un organe de pilotage manuel et/ou automatique de l'hélicoptère,
- générer et transmettre, par l'organe de commande (13), de nouvelles commandes de pilotage de l'hélicoptère (1), lesdites nouvelles commandes de pilotage permettant de réaliser des actions correctives pour minimiser les conséquences de l'accident de l'hélicoptère (1).

6. Procédé selon la revendication 5,
**caractérisé en ce qu'**on génère lesdites trajectoires de repli (3) pour qu'elles appartiennent à au moins deux groupes de trajectoires correspondant à deux niveaux distincts de sécurité préparamétrés par le pilote avant une mission.

7. Procédé selon l'une des revendications 5 ou 6,
**caractérisé en ce que** ledit procédé comporte des étapes consistant à :
- identifier, parmi ladite enveloppe en trois dimensions (2) des trajectoires de repli (3), au moins une trajectoire de repli préférée, et,
- proposer au pilote, via une interface homme-machine (9), la sélection de ladite trajectoire de repli préférée lorsqu'un événement indésirable est détecté.

8. Procédé selon la revendication 7,
**caractérisé en ce qu'**en cas d'absence de sélection de ladite trajectoire de repli préférée par le pilote de l'hélicoptère (1), ledit procédé comporte une étape consistant à mettre en oeuvre automatiquement ladite trajectoire de repli préférée.

9. Procédé selon l'une au moins des revendications 5 à 8,
**caractérisé en ce que**, préalablement à une mission de l'hélicoptère (1), ledit procédé de sécurité comporte une étape consistant à fournir au calculateur (8) des paramètres propres aux conditions de vol de l'hélicoptère (1), lesdits paramètres étant choisis parmi le groupe comportant : la masse de la charge transportée par l'hélicoptère, le positionnement de son centre gravité et son autonomie de vol.

10. Procédé selon l'une au moins des revendications 5 à 9,
**caractérisé en ce que**, préalablement à une mission de l'hélicoptère (1), ledit procédé de sécurité comporte une étape consistant à transmettre au calculateur (8) des préférences de pilotage dans le cas où ledit événement indésirable est identifié, lesdites préférences étant choisies parmi le groupe comportant : la limite de sollicitations dynamiques de l'hélicoptère, la proximité du relief et/ou des obstacles fixes ou mobiles, la limite de changements de direction sur une courte période de temps et l'éloignement par rapport à une route initiale.

11. Procédé selon l'une au moins des revendications 5 à 10,
**caractérisé en ce que** ledit procédé de sécurité comporte une étape visant à transmettre au calculateur (8) des données issues d'un capteur (10) permettant de reconstituer une image en trois dimensions de l'environnement extérieur.

12. Procédé selon l'une au moins des revendications 5 à 10,
**caractérisé en ce que** ledit procédé de sécurité comporte une étape visant à transmettre au calculateur (8) des données issues d'une base de données stockée dans une mémoire (11), lesdites données consistant en une cartographie en trois dimensions de l'environnement extérieur.

## Patentansprüche

1. Sicherheitssystem (4) zur Vermeidung eines Unfalls beim Steuern eines Hubschraubers und zur Minimierung der Folgen, wenn der Unfall des Hubschraubers (1) unvermeidbar ist, wobei das Sicherheitssystem (4) umfasst:
• einen Rechner (8), der es zu jedem Zeitpunkt t ermöglicht, eine dreidimensionale Hülle (2) von Ausweichflugbahnen (3) des Hubschraubers (1) zu erzeugen, wobei die Hülle (2) erhalten wird, indem zum Zeitpunkt t eine Gesamtheit von Positionen berechnet wird, die vom Hubschrauber (1) während einer vorgegebenen Flugdauer erreicht werden können, wobei der Rechner (8) vorab mit Daten betreffend die Flugfähigkeiten des Hubschraubers (1) parametriert wurde, die mindestens eine der folgenden Fähigkeiten umfassen: maximale Geschwindigkeiten und Beschleunigungen in den drei Raumrichtungen, Ableitungen höherer Ordnung von mindestens einer der maximalen Geschwindigkeiten oder Beschleunigungen in den drei Raumrichtungen, minimale Drehradien der Gierbewegung, Steig- oder Sinkwinkel, maximale Masse der beförderten Last und maximale Beanspruchungen,
• ein Notfallorgan (12), das die Ausgabe eines Warnsignals ermöglicht, wenn die Anzahl der Ausweichflugbahnen (3) unter einem ersten Schwellenwert liegt, wobei der erste Schwellenwert in Abhängigkeit von einer Abnahmegeschwindigkeit der Anzahl der Ausweichflugbahnen (3) variabel ist, wobei das Notfallorgan die automatische Übertragung von Flugdaten an Notfallbehörden ermöglicht, wobei die Flugdaten aus der Gruppe ausgewählt werden, die die von einem GPS-Modul stammenden Breiten- und Längengradkoordinaten, die Fluggeschwindigkeit und die Flugrichtung umfasst, und
• ein Steuerorgan (13), das es ermöglicht, wenn die Anzahl der Ausweichflugbahnen (3) null ist, korrigierende Maßnahmen zur Steuerung des Hubschraubers (1) durchzuführen, um die Folgen des Unfalls des Hubschraubers (1) zu minimieren.

2. Sicherheitssystem nach Anspruch 1,
**dadurch gekennzeichnet, dass** die Ausweichflugbahnen (3) zu mindestens zwei Gruppen von Flugbahnen gehören, die zwei verschiedenen vom Piloten vor einem Einsatz voreingestellten Sicherheitsniveaus entsprechen.

3. Sicherheitssystem nach einem der Ansprüche 1 oder 2,
**dadurch gekennzeichnet, dass** der Rechner (8) unter der dreidimensionalen Hülle (2) der Ausweichflugbahnen (3) mindestens eine bevorzugte Ausweichflugbahn identifiziert, und dass das Sicherheitssystem eine Mensch-Maschine-Schnittstelle (9) umfasst, die es dem Piloten ermöglicht, die bevorzugte Ausweichflugbahn auszuwählen.

4. Hubschrauber, **dadurch gekennzeichnet, dass** der Hubschrauber ein Sicherheitssystem (4) nach einem der vorhergehenden Ansprüche umfasst.

5. Sicherheitsverfahren zur Vermeidung eines Unfalls beim Fliegen eines Hubschraubers und zur Minimierung der Unfallfolgen, wenn ein Unfall des Hubschraubers (1) unvermeidbar ist,
wobei das Verfahren von einem Sicherheitssystem durchgeführt wird, das einen Rechner (8), ein Notfallorgan (12) und ein Steuerorgan (13) umfasst, wobei das Verfahren mindestens die folgenden Schritte umfasst:
• vor einem Einsatz des Hubschraubers, Parametrisieren des Rechners (8) mit Daten, die die Flugfähigkeiten des Hubschraubers (1) betreffen, einschließlich mindestens einer der folgenden Fähigkeiten: maximale Geschwindigkeiten und/oder Beschleunigungen in den drei Raumrichtungen, Ableitungen höherer Ordnung von mindestens einer der maximalen Geschwindigkeiten oder Beschleunigungen in den drei Raumrichtungen, minimale Drehradien der Gierbewegung, Steig- oder Sinkwinkel, maximale Masse der beförderten Last und maximale Beanspruchungen,
• Berechnen und Erzeugen, durch den Rechner (8), zu jedem Zeitpunkt t, einer dreidimensionalen Hülle (2) von Ausweichflugbahnen (3) des Hubschraubers (1), wobei die Hülle (2) erhalten wird, indem zu dem Zeitpunkt t eine Gesamtheit von Positionen berechnet wird, die von dem Hubschrauber (1) während einer vorbestimmten Flugdauer erreicht werden können,
• Ausgeben eines Warnsignals durch das Notfallorgan (12), wenn die Anzahl der Ausweichflugbahnen (3) unter einem ersten Schwellenwert liegt, wobei der erste Schwellenwert in Abhängigkeit von einer Abnahmegeschwindigkeit der Anzahl der Ausweichflugbahnen (3) variabel ist, und automatisches Übertragen von Flugdaten durch das Notfallorgan (12) an Rettungsbehörden, wobei die Flugdaten aus der Gruppe ausgewählt werden, die die von einem GPS-Modul stammenden Längen- und Breitengradkoordinaten, die Fluggeschwindigkeit und die Flugrichtung umfasst, und
wenn die Anzahl der Ausweichflugbahnen (3) null ist, das Verfahren die folgenden Schritte umfasst:
• Sperren von Steuerbefehlen, die von einem Organ zur manuellen und/oder automatischen Steuerung des Hubschraubers stammen,
• Erzeugen und Übertragen, durch das Steuerorgan (13), neuer Steuerbefehle für den des Hubschrauber (1), wobei die neuen Steuerbefehle die Durchführung von Korrekturmaßnahmen ermöglichen, um die Folgen des Unfalls des Hubschraubers (1) zu minimieren.

6. Verfahren nach Anspruch 5,
**dadurch gekennzeichnet, dass** die Ausweichflugbahnen (3) so erzeugt werden, dass sie zu mindestens zwei Gruppen von Flugbahnen gehören, die zwei verschiedenen vom Piloten vor einem Einsatz voreingestellten Sicherheitsniveaus entsprechen.

7. Verfahren nach einem der Ansprüche 5 oder 6,
**dadurch gekennzeichnet, dass** das Verfahren die folgenden Schritte umfasst:
• Identifizieren mindestens einer bevorzugten Ausweichflugbahn aus der dreidimensionalen Hülle (2) der Ausweichflugbahnen (3), und,
• Anbieten, dem Piloten, der Auswahl der bevorzugten Rückfalltrajektorie über eine Mensch-Maschine-Schnittstelle (9), wenn ein unerwünschtes Ereignis erkannt wird.

8. Verfahren nach Anspruch 7,
**dadurch gekennzeichnet, dass**, wenn der Pilot des Hubschraubers (1) den bevorzugten Rückzugspfad nicht auswählt, das Verfahren einen Schritt umfasst, bei dem der bevorzugte Rückzugspfad automatisch angewandt wird.

9. Verfahren nach mindestens einem der Ansprüche 5 bis 8,
**dadurch gekennzeichnet, dass** das Sicherheitsverfahren vor einem Einsatz des Hubschraubers (1) einen Schritt umfasst, der darin besteht, dem Rechner (8) die Flugbedingungen des Hubschraubers (1) betreffende Parameter zu liefern, wobei die Parameter aus der Gruppe ausgewählt werden, die die Masse der vom Hubschrauber transportierten Last, die Positionierung seines Schwerpunkts und seine Flugreichweite umfasst.

10. Verfahren nach mindestens einem der Ansprüche 5 bis 9,
**dadurch gekennzeichnet, dass** vor einem Einsatz des Hubschraubers (1) das genannte Sicherheitsverfahren einen Schritt umfasst, der darin besteht, dem Rechner (8) Präferenzen für die Steuerung im Falle der Identifizierung des unerwünschten Ereignisses zu übermitteln, wobei die Präferenzen aus der Gruppe ausgewählt werden, die die Begrenzung der dynamischen Belastung des Hubschraubers, die Nähe zum Relief und/oder zu festen oder beweglichen Hindernissen, Grenzen von Richtungsänderungen innerhalb eines kurzen Zeitraums und die Entfernung von einer ursprünglichen Route umfasst.

11. Verfahren nach mindestens einem der Ansprüche 5 bis 10,
**dadurch gekennzeichnet, dass** das Sicherheitsverfahren einen Schritt zur Übertragung von Daten an den Rechner (8) umfasst, die von einem Sensor (10) stammen, der es ermöglicht, ein dreidimensionales Bild der äußeren Umgebung zu rekonstruieren.

12. Verfahren nach mindestens einem der Ansprüche 5 bis 10,
**dadurch gekennzeichnet, dass** das Sicherheitsverfahren einen Schritt zur Übertragung von Daten an den Rechner (8) umfasst, die aus einer in einem Speicher (11) abgelegten Datenbank stammen, wobei die genannten Daten aus einer dreidimensionalen Kartografie der äußeren Umgebung bestehen.

## Claims

1. Safety system (4) seeking to avoid an accident during pilotage of a helicopter and to minimise the consequences of same when the accident of said helicopter (1) is unavoidable, said safety system (4) including:
• a computer (8), which allows, at any instant t, an envelope (2) of fallback trajectories (3) of the helicopter (1) to be generated in three dimensions, said envelope (2) being obtained by calculating, at the instant t, a set of positions attainable by the helicopter (1) during a predetermined duration of flight, said computer (8) being parameterised beforehand with data relating to the flight capabilities of the helicopter (1) including at least one of the following capabilities: maximum speeds and accelerations in the three directions of space, derived of higher order from at least one of the maximum speeds or accelerations in the three directions of space, minimum turning radii of the yawing movement, climb or descent angles, maximum weight of the payload and maximum stress values,
• an emergency device (12) allowing a warning signal to be emitted when the number of fallback trajectories (3) is less than a first threshold value, said first threshold value being variable according to a speed of reduction of said number of fallback trajectories (3), the emergency device allowing the automatic transmission of flight data to rescue authorities, said flight data being chosen among the group including the coordinates of latitude and longitude provided by a GPS module, the speed and direction of flight, and
• a control device (13), which allows, when the number of fallback trajectories (3) is zero, corrective pilotage actions of the helicopter (1) to be implemented so as to minimise the consequences of the accident of the helicopter (1).

2. Safety system according to Claim 1,
**characterised in that** said fallback trajectories (3) belong to at least two groups of trajectories corresponding to two distinct safety levels pre-parameterised by the pilot before a mission.

3. Safety system according to either one of Claims 1 or 2, **characterised in that** said computer (8) identifies, among said envelope (2) in three dimensions of the fallback trajectories (3), at least one preferred fallback trajectory, and **in that** said safety system comprises a man-machine interface (9) allowing the pilot to select said preferred fallback trajectory.

4. Helicopter **characterised in that** said helicopter comprises a safety system (4) according to one of the preceding claims.

5. Safety method seeking to avoid an accident during pilotage of a helicopter and to minimise the consequences of same when the accident of said helicopter (1) is unavoidable,
said method being implemented by a safety system comprising a computer (8), an emergency device (12) and a control device (13), the method including at least the steps consisting of:
- before a mission of the helicopter, parameter said computer (8) with data relating to the flight capabilities of the helicopter (1) including at least one of the following capabilities: maximum speeds and/or accelerations in the three directions of space, derived of higher order from at least one of the maximum speeds or accelerations in the three directions of space, minimum turning radii of the yawing movement, climb or descent angles, maximum weight of the payload and maximum stress values,
- calculation and generation by the computer (8), at any instant t, of an envelope (2) of fallback trajectories (3) of the helicopter (1) in three dimensions, said envelope (2) being obtained by calculating, at the instant t, a set of positions attainable by the helicopter (1) during a predetermined duration of flight,
- emission by the emergency device (12) of a warning signal when the number of fallback trajectories (3) is less than a first threshold value, said first threshold value being variable according to a speed of reduction of said number of fallback trajectories (3), and automatic transmission by the emergency device (12) of flight data to rescue authorities, said flight data being chosen among the group including the coordinates of latitude and longitude provided by a GPS module, the speed and direction of flight, and
when the number of fallback trajectories (3) is zero, said method includes steps consisting of:
- inhibiting pilotage commands provided by a manual and/or automatic pilotage device of the helicopter,
- generation and transmission by the control device (13) of new pilotage commands of the helicopter (1), said new pilotage commands allowing corrective actions to be taken to minimise the consequences of the accident of the helicopter (1).

6. Method according to Claim 5,
**characterised in that** said fallback trajectories (3) are generated so that they belong to at least two groups of trajectories corresponding to two distinct safety levels pre-parameterised by the pilot before a mission.

7. Method according to either one of Claims 5 or 6,
**characterised in that** said method includes steps consisting of:
- identifying, among said envelope (2) in three dimensions of the fallback trajectories (3), at least one preferred fallback trajectory, and
- proposing to the pilot, via a man-machine interface (9), the selection of said preferred fallback trajectory when an undesirable event is detected.

8. Method according to Claim 7,
**characterised in that** in case of absence of selection of said fallback trajectory preferred by the pilot of the helicopter (1), said method includes a step consisting of automatically implementing said preferred fallback trajectory.

9. Method according to at least one of Claims 5 to 8,
**characterised in that**, before a mission of the helicopter (1), said safety method includes a step consisting of providing the computer (8) with parameters specific to the flight conditions of the helicopter (1), said parameters being chosen among the group including: the weight of the payload transported by the helicopter, the position of its centre of gravity and its fuel autonomy of flight.

10. Method according to at least one of Claims 5 to 9,
**characterised in that**, before a mission of the helicopter (1), said safety method includes a step consisting of transmitting to the computer (8) pilotage preferences in the case where said undesirable event is identified, said preferences being chosen among the group including: the dynamic stress limit of the helicopter, the proximity of the relief and/or the fixed or moving obstacles, the limit of changes of direction over a short period of time and the distance with respect to an initial route.

11. Method according to at least one of Claims 5 to 10,
**characterised in that** said safety method includes a step seeking to transmit to the computer (8) data provided by a sensor (10) allowing an image in three dimensions of the outside surroundings to be reconstructed.

12. Method according to at least one of Claims 5 to 10,
**characterised in that** said safety method includes a step seeking to transmit to the computer (8) data provided by a database saved in a memory (11), said data consisting in a map in three dimensions of the outside surroundings.
